# EUROPEAN PATENT APPLICATION

(11) **EP 1 441 472 A2**
(43) Date of publication of application: **28.07.2004**
(21) Application number: 04250183.3
(22) Date of filing: 15.01.2004
(51) Int. Cl.: H04L 12/28

(54) **Wireless local area network time division duplex relay system with high speed automatic up-link and down-link detection**

(30) Priority: 22.01.2003 US 348843
(71) Applicant: Hong Kong Applied Science and Technology Research Institute Co. Ltd., Tshimshatsui, Kowloon (CN)
(72) Inventor: Song, Peter Chun Teck, Hong Kong (CN); Murch, Ross David, Kowloon Hong Kong (CN); Leung, Hang Ching Jason, Yuen Long, NT Hong Kong (CN); Tao, Wai Yuk William, Kowloon Hong Kong (CN)
(74) Representative: Jackson, Richard Eric

(57) **Abstract**

A time division duplex repeater system includes two antennas, a switched directional amplifier and control circuitry. The antennas serve first and second coverage areas where the second coverage area is an extension of the first coverage area. The switched directional amplifier is coupled between the two antennas and has a single amplifier. The control circuitry is coupled to the switched directional amplifier and to receive inputs of the antennas. The control circuitry receives transmissions from the coverage areas and applies control signals to the switched directional amplifier to control the direction of transmission. The control circuitry may control the amplifier gain and direction of transmission based on the input signal power level.

## Description

### TECHNICAL FIELD

The present invention relates generally to wireless communication systems and, more particularly, to time division duplex (TDD) wireless relay systems.

### BACKGROUND OF THE INVENTION

Wireless communication systems have a base station or access point from which radio signals are transmitted and propagate. These signals are then received by a mobile station, remote station, user station, etcetera (referred to herein as station) allowing communication to proceed. Stations may be, for example, a computer with a wireless modem such as a notebook computer fitted with a wireless local area network (WLAN) card (referred to herein as a wireless notebook), mobile telephone or a wireless personal digital assistant. Radio signals can only propagate a certain distance before their power level falls below a certain threshold and cannot be usefully received. The area around a network access point in which signals can be received is known as the coverage area and is sometimes referred to as a cell. When a station moves outside the coverage area signals cannot be received and communication is not possible. Accordingly it is often desirable to implement wireless systems that create as large a network coverage area as possible at minimum cost.

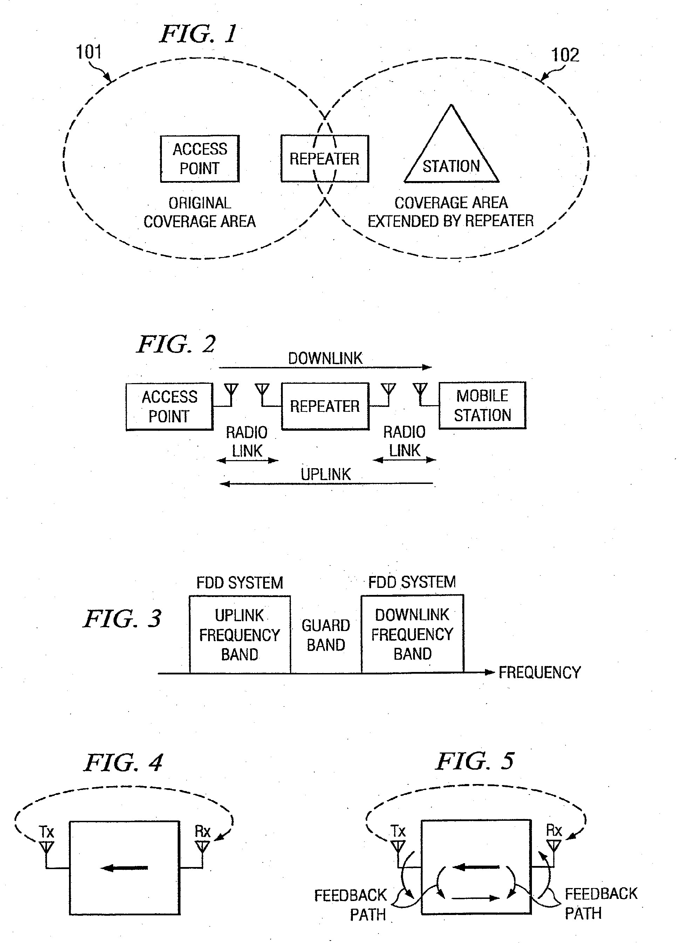

One way to extend the coverage area of a network is by the use of a relay or repeater system. The relay is a system that receives, amplifies and re-transmits radio signals at a higher power level. By placing a relay on the edge of an area of coverage, the relay receives, amplifies and re-transmits the signals from a first coverage area to a second coverage area, thus extending the coverage area of the original signals. An exemplary relay implementation is shown in FIGURE 1, wherein an original or first coverage area 101 has been supplemented with a repeater or second coverage are 102.

Wireless communication systems typically provide two-way or duplex communication so that an access point can exchange data with or "talk" to a station, such as a wireless notebook, and the station can "talk" to the access point. In effect, there are two separate radio links by which these two signals travel, known respectively as the down-link and up-link, as shown illustratively in FIGURE 2.

Conventionally, the up-link and down-link are set up on different frequencies. These schemes are referred to as Frequency Division Duplex (FDD) systems. In commercial mobile telephone systems, for example, the down-link may use a frequency band such as 870-890MHz while the up-link may use a lower frequency band such as 825-845MHz. The key to FDD systems is that the two signals are completely isolated in frequency and therefore do not interfere when simultaneous transmission or "talking" occurs from both the access point and station. An illustration of up-link and down-link frequency bands is shown in FIGURE 3. It should be appreciated that the up-link and/or down-link frequency bands may be further divided into channels, such as frequency division channels defined from sub-bands of the up-link and down-link frequency bands, time division channels defined from time slices or bursts of the up-link and down-link transmissions, code division channels defined from orthogonal pseudo-random code spreads applied to up-link and down-link transmissions, and/or combinations thereof, to facilitate multiple access techniques, such as frequency division multiple access (FDMA), time division multiple access (TDMA), and code division multiple access (CDMA). FDD systems have the disadvantage of requiring twice as much frequency spectrum as some other systems for duplex communication.

An alternative way to separate these up and down-link signals is to use the same frequency band for both signals but separate them in time. That is, at one instant or time slot only down-link transmission occurs while at the next instant or timeslot only up-link transmission occurs. This is referred to as Time Division Duplexing (TDD). Both the up and down-links cannot simultaneously transmit but if the timeslots are small enough and frequent enough then communication by voice will appear to be simultaneous in both the up and down-links. As with FDD discussed above, TDD may implement various channelization schemes, such as those based upon frequency division, time division, and/or code division, within the TDD frequency band, such as to provide multiple access techniques.

One of the significant problems for all repeaters is that of feedback causing the system to oscillate. As shown in FIGURE 4, it will be observed that some signals from the transmitter are fed back to the receiver of the repeater. If these signals are then amplified again there can be a circular path resulting in signals which get stronger and stronger until oscillation or overload occurs. To maximize the coverage area incorporated by the relay, the signal amplification provided by the relay should be as high as possible. Maximum amplification is limited, however, by the isolation between transmit and receive path, antenna, etectera. Hence ensuring very good isolation between the two antennas in the repeater system is essential so that the feedback path is not significant.

One of the significant differences between TDD and FDD repeater systems is that the oscillation/feedback problem in TDD systems is generally worse. This is, because in addition to the feedback problem described above, there is also another feedback path as shown in FIGURE 5. Because TDD systems use the same frequency for up-link and down-link channels, in some circumstances the up-link signals can be received at the down-link receiver and vice versa. In addition, the signals are amplified in both the up-link and down-link amplifiers. Therefore the gain in the feedback loop is doubled. To combat feedback in TDD systems, isolation between the up-link and down-link channels generally needs to be greater than that of FDD systems to prevent feedback.

One example of a prior attempt to provide extended coverage in a cellular TDD system is shown in Untied States patent number 5, 812, 933, issued to Niki, the disclosure of which is incorporated herein by reference. In the embodiments disclosed in Niki, separate amplifiers are used in both the up-link and the down-link. Accordingly, to prevent oscillation, the signal paths associated with the amplifiers must be sufficiently isolated, which may be difficult to achieve in various implementations. Specifically, stringent isolation between the signals of the amplifiers in Niki is required because, as shown above, TDD systems can experienced feedback paths associated with the use of the same frequency carrier in the up-link and down-link paths and, with the amplifiers operating simultaneously, extra effort will need to be spent in isolating the amplifiers or otherwise controlling oscillation. One technique available in the system of Niki to avoid oscillation, is the cellular protocols used therein, clearly defining when up-link and down-link transmissions can occur. However, if a protocol allowing simultaneous up-link and down-link transmission, such as a carrier sense multiple access/collision avoidance (CSMA/CA) protocol were used, the system of Niki would experience an increased chance of oscillation.

One example of a prior attempt to provide extended coverage in a cellular FDD system is shown in United States patent number 4,849,963, issued to Kawano, the disclosure of which is incorporated herein by reference. In embodiments disclosed by Kawano, a same amplifier is used in both the up-link and down-link. Since the system therein uses different frequency bands in the up-link and down-link, isolation between these two signal paths is already provided by the protocol. Accordingly, duplexer network is used in Kawano to separate up-link and down-link signals and provide sufficient isolation to amplify up-link and down-link signals without oscillation.

Accordingly, there is a need for a system and method for extending a coverage area that does not require a separate assignment of frequencies, and thereby provide efficient use of frequency spectrum such as TDD. There is a further need for a system and method for extending a coverage area that may be implemented inexpensively without causing harmful interference with an existing coverage area. There is a further need for a system and method that affords sufficient isolation between up-link and down-link channels to prevent unwanted oscillation of a repeater associated with an extended coverage area. The repeater should also be easy to use and function automatically and be standalone without the need for additional external control signals or special adjustments.

### BRIEF SUMMARY OF THE INVENTION

The present invention is directed to systems and methods in which a time division duplex (TDD) repeater for a wireless communications system is implemented to extend a coverage area. The repeater may be implemented within, for example, a wireless local area network (WLAN) system such as that described in IEEE 802.11 and HIPERLAN/1 and 2. The repeater of the preferred embodiment does not require any additional frequencies to be allocated. Moreover, embodiments of the relay implement a single, switched amplifier for transmitting in both the up and down-link directions which increases the up-link and down-link isolation and minimizes harmful feedback and oscillation tendencies. The single amplifier design also results in a lower cost of implementation over conventional techniques.

According to one embodiment of the invention, a time division duplex repeater system includes two antennas, a switched directional amplifier and control circuitry. The antennas serve first and second coverage areas where the second coverage area is an extension of the first coverage area. The switched directional amplifier of this embodiment is coupled between the two antennas and preferably has a single amplifier. The control circuitry is coupled to the switched directional amplifier and to receive inputs of the antennas. The control circuitry receives transmissions from the coverage areas and applies control signals to the switched directional amplifier to control the direction of transmission.

The control circuitry may include at least one power detection circuit coupled to receive outputs of the antennas. The power detection circuits may output power level signals, proportional to the input power at respective receive inputs of the antennas, that are utilized in determining the direction of transmission of the repeater, such as by the aforementioned control circuitry. The control circuitry may also output gain control signals to the switched directional amplifier based on the power level signals. The control circuitry may also mute the transmit amplifier based on the power level signals.

The repeater system may also incorporate one or more pre-amplification stages between the outputs of each receive antenna and the switched directional amplifier. Power detection circuits may be coupled to the outputs of the respective pre-amplifier stages. The power levels determined may be used to bypass one or more stages of amplification prior to transmission from the repeater. The antennas may be Yagi antennas or any other type of directional antenna or antenna configuration and may be mounted to the repeater using a swivel mount or other adjustable mount to facilitate selection of coverage areas associated therewith.

According to another embodiment of the invention, a method extends a coverage area of a signal. According to a preferred embodiment of the method, first and second input signals are received over opposing directional antennas where the directional antennas serve respective first and second coverage areas. A direction of transmission may be determined based on a power level associated with the first and second input signals. One of the first and second input signals is amplified at a common amplifier based on the determined direction of transmission and the amplified input signal is output at the same frequency via the opposing directional antenna.

The gain associated with amplifying the input signals may be controlled based on the power level of the input signals. The amplification may also be muted based on input signal power level. The method may further include pre-amplifying the input signals in one or more stages. The method may still further include bypassing one or more amplification stages based on the power level of the input signals.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

The above described features and advantages of the present invention will be more fully understood with reference to the attached figures and detailed description, in which:

FIGURE 1 depicts a repeater used in extending a coverage area.

FIGURE 2 depicts a mobile station relative to a repeater and a wireless access point which illustrates up-link and down-link transmission paths.

FIGURE 3 depicts a prior art implementation of a communication system that uses separate up-link and down-link frequency bands.

FIGURE 4 depicts a feedback path within a frequency division duplex (FDD) repeater.

FIGURE 5 depicts feedback paths within a time division duplex (TDD) repeater.

FIGURE 6 depicts a functional block diagram of a repeater according to an embodiment of the present invention.

FIGURE 7 depicts a repeater having a switched directional amplifier that is driven by pre-amplifiers associated with each antenna according to an embodiment of the present invention.

FIGURE 8 depicts a repeater that includes two pre-amplifiers that are used in conjunction with one switched directional amplifier according to an embodiment of the present invention.

FIGURE 9 depicts another embodiment of the invention that incorporates a different implementation for the switch directional amplifier.

FIGURE 10 depicts an implementation of the repeater that improves network coverage and performance according to an embodiment of the present invention.

### DETAILED DESCRIPTION

According to embodiments of the present invention, a time division duplex (TDD) repeater for a wireless communications system may be implemented to extend a coverage area. The repeater may be implemented within, for example, a wireless local area network (WLAN) system such as that described in IEEE 802.11 and HIPERLAN/1 and 2. The preferred embodiment repeater does not require any additional frequencies to be allocated by the system for its use. Moreover, the relay of preferred embodiments implement a single, switched amplifier for transmitting in both the up and down-link directions which increases the up-link and down-link isolation and minimizes harmful feedback and oscillation tendencies. Moreover, the single amplifier design also results in a lower cost of implementation over conventional techniques.

The repeater may also be implemented to facilitate installation with a minimum of expertise. It may also operate in an automatic and standalone manner so that no or a minimum of external control signals or adjustments are required. For example, according to one embodiment of the invention, control signals for selection of the down or up-link directions are generated internally by listening to normal communications between the access point and the station.

For protocols based on CSMA/CA (carrier sense multiple access/collision avoidance), such as 802.11 and HIPERLAN, the protocol itself attempts to avoid collisions of signals between the access point and station. A collision occurs when the station and access point simultaneously transmit at the same time so that both signals cannot be processed by the repeater. However, collisions cannot be entirely avoided and still occur from time to time causing the signals that collide to be entirely lost. The 802.11 and HIPERLAN protocols and other CSMA/CA protocols, however, recognize the collision and work to retransmit the lost signals until there is no collision and the signals are successfully sent.

From the viewpoint of the repeater, these collisions appear to be a simultaneous up and down-link transmission. A typical TDD repeater configuration, such as one designed for cellular TDD telephone systems (where the protocol does not usually allow signal collisions to occur), may attempt to simultaneously amplify both the up and down-links resulting in self-oscillation. According to an embodiment of the present invention, a single switched directional amplifier, or multiple switched directional amplifiers, operate so that only one link, either an up-link or down-link transmission, is amplified and retransmitted. This automatically overcomes oscillation problems.

Additionally, the repeater may include logic to automatically calibrate itself so that amplification is not so large as to cause self-oscillation and not so low as to make the repeater ineffective. Automatic self-calibration facilitates simple and standalone repeater implementation. Therefore the repeater may incorporate logic for the self-calibration process. Alternatively, the repeater may utilize signals from a centralized control center to adjust the amplification level applied at the repeater.

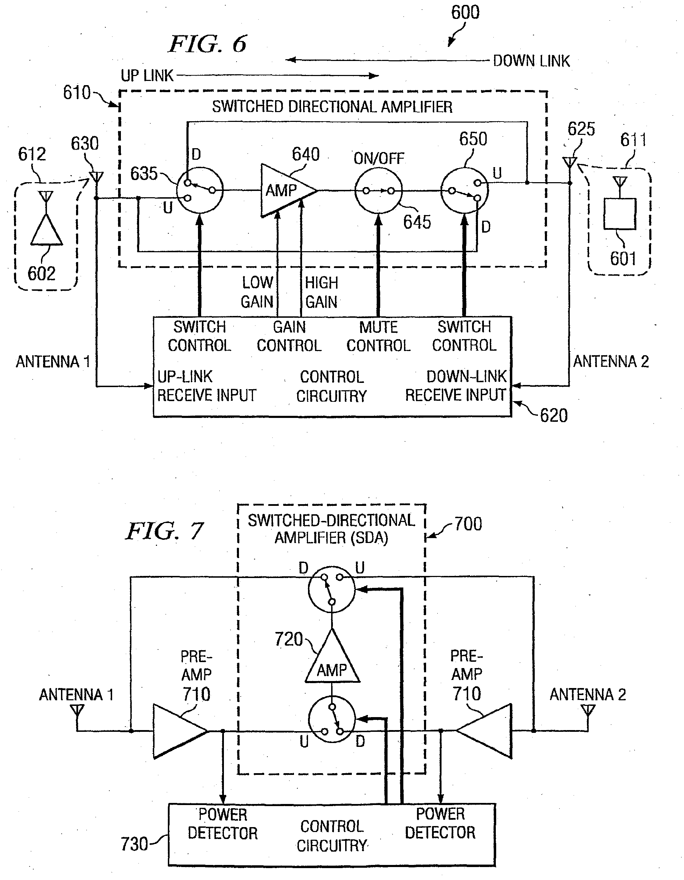

FIGURE 6 depicts a functional block diagram of a repeater 600 according to an embodiment of the present invention. Referring to FIGURE 6, the repeater 600 includes a switched directional amplifier 610 that is controlled by control circuitry 620. Switched directional amplifier 610 of the illustrated embodiment is also coupled to antenna 625 for transmitting/receiving in a first service area (e.g., service area 611) (e.g., receiving in the down-link direction and transmitting in the up-link direction) and to antenna 630 for transmitting/receiving in a second service area (e.g., service area 612) (e.g., receiving in the up-link direction and transmitting in the down-link direction).

The antennas 625 and 630 may be any antennas with sufficient directional isolation from each other. One of the antennas is preferably generally aimed at a network that is to be extended. The other antenna is preferably generally aimed at a device or other part of the network to which the extended coverage area is brought. In the context of a wireless local area network, for example, the antenna 625 may be aimed at an access point (e.g., node 601) and the antenna 630 at a wireless station (e.g., node 602). When the repeater is implemented with two antennas, both the antennas 625 and 630 are preferably implemented as bi-directional antennas. The repeater may also be implemented with, for example, four antennas -- a pair on each side. In this embodiment, each antenna may either transmit or receive. Of course, multiple antenna diversity configurations may additionally or alternatively be implemented according to the present invention. Likewise, adaptive beam forming techniques and/or multiple beam arrays may be utilized according to embodiments of the present invention.

The switched directional amplifier 610 may include an amplifier 640, switches 635 and 650, and a mute circuit 645. The control circuitry 620 of the illustrated embodiment provides control signals to the switched directional amplifier 610 to control the direction of transmission in the up-link or down-link direction. In some embodiments, the control signals may also control the level of amplification so that mobile stations nearby do not overload the repeater and cause distortion. The control of the level of amplification may also be used to help keep the over all loop gain of the system below unity. In very rare configurations it is possible that the antenna isolation is reduced (perhaps the antennas are faulty or incorrectly located and/or reflective paths exist) and it is therefore possible that if the loop gain is greater than unity self-oscillation may occur. The control of the level of amplification therefore also allows this self-oscillation to be prevented in the rare event that antenna isolation is not high enough.

Mute circuit 645, such as may comprise an on/off switch, may be used to control power to the amplifier or to otherwise prevent the coupling of transmit power to either of the antennas. Mute circuit 645 may operate under control of the control circuitry.

Each of switches 635 and 650 of the illustrated embodiment receives a control signal or signals from the control circuitry 620. The switches change the direction of signal propagation and amplification between antennas 625 and 630. For example, the switches may be configured to couple signals received from antenna 625 to the input of amplifier 640 and the output of amplifier 640 to antenna 630 for down-link transmissions. The switches may be configured to couple signals received from antenna 630 to the input of amplifier 640 and the output of amplifier 640 to antenna 625 for up-link transmissions. In this manner, the control circuitry configures the switched directional amplifier to transmit signals received from one coverage area into another coverage area at the same frequency.

In general, the control circuitry applies a duty cycle to switches 635 and 650. The duty cycle may be configured so that the up-link and down-link transmissions occur during non-overlapping time slots. When the repeater is operating for 802.11 WLAN systems, for example, the duty cycle may be entirely determined by the communications between the access point and the stations. For example, if a station starts an up-link communication then the control circuitry will detect a signal at antenna 630 and configure switched directional amplifier 610 into the up-link direction. Alternatively, if a down-link transmission begins then a signal at antenna 625 will be detected and switched directional amplifier 610 will be configured into the down-link direction. If there are no signals then the switched directional amplifier may be switched off. If up and down-link transmissions begin together then the control circuitry will select, perhaps randomly or according to some hierarchy (such as access points are given preference over stations or the node last to transmit is given priority), either an up and down-link direction but not both. For example, in this situation the 802.11 protocol will automatically establish that a collision in down-link and up-link transmissions has occurred with the result that the station or access point will re-transmit the information again in a later time slot.

Control circuitry 620 may also send control signals to amplifier 640 to control the gain of amplifier 640. The gain of amplifier 640 may be controlled to have low or high levels power levels, multiple discrete power levels, or selectable power levels over a continuous range depending on the implementation, for example. The control circuitry may send control signals to the amplifier to select the power level based on the power of the signal received from one of antennas 625 or 630 or based on any other convenient criteria.

The single amplifier design shown in FIGURE 6 uses a single amplifier to amplify both the up-link and the down-link. This reduces the amount of loop gain within the repeater system and accordingly reduces the sensitivity of the repeater to feedback by approximately fifty percent as compared to typical two amplifier designs.

Referring still to FIGURE 6, each of the antennas 625 and 630 provide an input to the switched directional amplifier and to control circuitry 620. The inputs from antennas 625 and 630 as processed by control circuitry 620 may each be passed through a respective power detector (not shown) for analysis of the received signals and corresponding control of switched directional amplifier 610. For example, power detectors may be implemented which convert the RF signal into a DC signal power voltage proportional to the RF power level of the RF signal. The signal power voltages may then be processed by control circuitry 620 to detect transmission of signals to be repeated and/or to determine an appropriate gain level for amplifier 640. For example, the signal power voltages may be applied to the inputs of comparators (not shown) which have inputs coupled to respective voltages thresholds (e.g., T1-T3). When the signal power voltage exceeds (or is less than depending on implementation) the corresponding threshold T1 - T3 at a comparator, the comparator may output a control signal. Based on the outputs of the comparators, control circuitry 620 may output control signals to the switched directional amplifier either to turn on or off the amplifier, to set the amplifier to low amplification or to high amplification, and/or to select amplification of the up-link or down-link directions. For example, if the input signal is above threshold T1, then a high level control signal may be generated and provided to amplifier 640. If the input signal is above threshold T2, then a low level control signal may be generated and provided to amplifier 640. If the input signal is above threshold T3, then a control signal may be generated and provided to the on/off switch 645 to turn the amplifier off. In addition, if the signal is below threshold T1, then a control signal may be generated and provided to make circuit 645 to turn the amplifier off. Additionally or alternatively, the output of the comparator may be used to control the up-link or down-link direction of transmission, e.g., the direction of transmission may be determined based on the signal with the largest power level received from the two coverage areas serviced by the repeater 600.

The aforementioned power-detectors may be implemented as analog power detectors or an analog to digital conversion may be performed at the power detector to derive a digital value representing the power level of the RF signals. It will be understood, however, that switching speed is likely improved when analog power detectors are used in a control scheme such as that described above instead of analog to digital converters.

Most cellular systems are for voice communication which requires less switching speed. Accordingly, an implementation with a slower switching speed may be appropriate for these applications. This may be implemented with, for example, D/A and A/D converters for measuring the RF power of the signal input to control circuitry 620 and a microprocessor to perform up-link or down-link switching and to apply gain control signals to amplifier 640.

FIGURE 7 depicts another embodiment of the invention in which switched directional amplifier 700 is driven by pre-amplifiers 710 for each antenna. Preamplifiers 710 are utilized at each antenna, such as for preconditioning a signal for analysis and/or repeater amplification, but only one power amplifier 720 is utilized for repeater amplification and is controlled by switches as described above. Preamplifiers 710 may improve the noise performance of the system and/or provide the power detectors with more sensitivity. Control circuitry 730 may apply control signals to switched directional amplifier 700 in the same manner as that described relative to FIGURE 6.

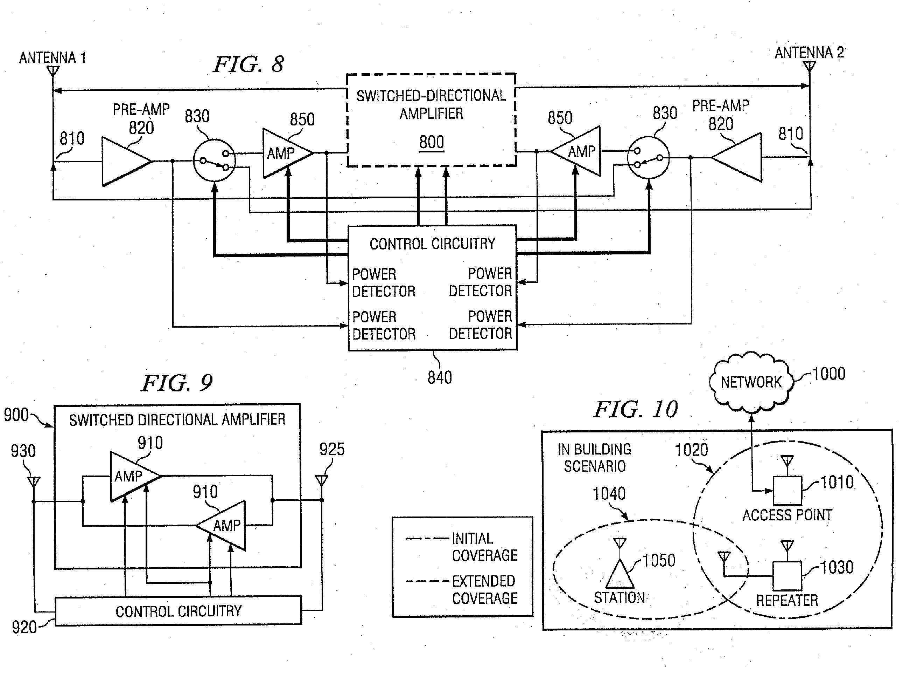

FIGURE 8 depicts another embodiment of the invention in which two pre-amplifiers are used in conjunction with one switched directional amplifier 800. Referring to FIGURE 8, low noise amplifier 820 is coupled to receive output 810 of each antenna. The output of low noise amplifier 820 is coupled to the input of switch 830 which is controlled by control circuitry 840. Switch 830 is used to controllably couple the output of low noise amplifier 820 to either pre-amplifier 850 or to a corresponding transmitting antenna. The output of each pre-amplifier 850 is coupled to switched directional amplifier 800 which provides additional gain and the same features described with reference to FIGURE 6.

In controlling the amplification and power level of the transmitted signal output by the repeater, control circuitry 840 of the illustrated embodiment receives signals from both the output of low noise amplifiers 820 and the output of pre-amplifiers 850. When the signal power level output by the low noise amplifier is determined to be too high by corresponding power detection circuitry within the control circuitry 840, the control circuitry may cause switch 830 to bypass pre-amplifier 850. Alternatively, the control circuitry may cause the gain of the pre-amplifier to be lowered.

Control circuitry 840 may additionally or alternatively monitor the power level of the output of pre-amplifier 850 and, based on the power level, may send gain control signals to switched directional amplifier 800 to adjust the gain of the final gain stage. In this manner, the embodiment of FIGURE 8 allows the use of power detectors with a small dynamic range. By using multiple power detectors, each responding to a different stage of amplification, the dynamic range of the power detectors is effectively increased.

Referring still to FIGURE 8, two power detectors (not shown) may be implemented with respect to each receiving antenna. A first such power detector may be coupled to the output of low noise amplifier 820, for example. A second such power detector may be coupled to the output of pre-amplifier 850, for example. Comparators may have inputs coupled to the outputs of the power detectors and threshold voltages (e.g., T1 - T3). The power detectors may convert the RF signal at the inputs into a DC signal power voltage proportional to the RF power level of the RF signal. When the signal power voltage exceeds (or is less than depending on implementation) the corresponding threshold (T1 - T3) at a comparator, the comparator may output a signal to a reminder of control circuitry 840. Based on the outputs of the comparators, control circuitry 840 may output gain control signals to the switched directional amplifier to set the amplification level of the amplifier 800. In addition, control circuitry 840 may output a control signal which in turn controls switchs 830. Additionally or alternatively, the output of a comparator may determine whether the repeater will transmit in the up-link or down-link direction and may cause control signals to be sent to switched directional amplifier 800 accordingly.

If the input signal is above threshold T1, then a high level control signal may, for example, be generated by control circuitry 840 and provided to an amplifier of switched directional amplifier 800. If the input signal is above threshold T2, then a low level control signal may be generated by control circuitry 840 and provided to an amplifier of switched directional amplifier 800. If the input signal is above threshold T3, then a control signal may be generated by control circuitry 840 and provided to switch 830 to bypass the pre-amplifier 950. In addition, if the signal is below threshold T1, then a control signal may be generated and provided to the switched directional amplifier 800 to turn the amplifier off.

To facilitate the simple and standalone operation of the repeater, the amplifier may be self calibrating so that its gain is not large enough to cause self-oscillation and not low enough to make the repeater ineffective. Referring still to FIGURE 8, self calibration may be implemented, for example, in control circuitry 840. Control circuitry 840 may, for example, from time to time or during a configuration mode apply a calibrated signal with a known amplitude to the inputs 810 or at any other point in the pre-amplifier and amplifier chain. Control circuitry 840 may measure the amplified result of the calibrated signal as it comes out of the directional amplifier. The overall gain in amplitude through the amplifier chain may be measured at the control circuitry and then adjusted in any convenient manner. The adjustments may be made using the amplifier control signal described above. Alternatively, the control signals may be applied to the amplifiers to adjust the amplifier gain in any convenient manner. One such convenient approach would be the use of a programmable amplifier. In addition, the control circuitry may detect an overload condition for the amplifier can also be incorporated so that the amplifier gain can be reduced if overload occurs. This automatic self-calibration facilitates simple and standalone repeater usage and tends to make the repeater transparent to the network protocol of the network in which the repeater is implemented. In alternate embodiments of the invention, control circuitry 840 may respond to calibration control signals transmitted to the repeater by an access point or station.

Another important aspect that affects the performance of a repeater system according to embodiments of the present invention is how it handles the processing of channels within a frequency band for which signal repeating is provided. In general all channels can be handled and processed in the same way and together. However a relaxation in the system specifications is possible by allowing the repeater to focus on only an active channel and to adjust the system to meet the specifications for that channel alone. In certain implementations this allows a simplification of the circuitry.

FIGURE 9 depicts an embodiment of the invention that incorporates a different implementation for the switched directional amplifier and which may be operated in accordance with the CSMA/CA TDD protocol utilized in 802.11 and HIPERLAN WLAN systems. In this embodiment, two amplifiers 910 are implemented in a cross-coupled, tri-state implementation, in switched directional amplifier 900. On/off controls for each amplifier, such as may be provided under control of control circuitry 920, may be used to ensure that at any given time only one or none of the amplifiers is operating. Preferably, amplification of any form does not occur simultaneously in both directions. This helps prevent self-oscillation that might otherwise occur upon collisions within a CSMA/CA protocol. An advantage this embodiment is that the switches may be removed and replaced by control signals that turn on or off the respective amplifier rather than switching the input and output signals themselves. Because one or more of the amplifiers is always off, the loop gain is equal to one of the amplifier chains only rather than two as found in prior art systems.

The duty cycle for this implementation of the switched directional amplifier is similar to other embodiments when the repeater is operating for 802.11 WLAN systems. That is, the duty cycle may be determined by the communications between the access point and the stations. For example, if a station starts an up-link communication, then control circuitry 920 detects a signal at antenna 930 and configures switched directional amplifier 900 for up-link transmissions. Alternatively, if a down-link transmission begins then a signal at antenna 925 is detected and switched directional amplifier 900 may be configured to transmit in the down-link direction. If there are no signals then switched directional amplifier 900 may be switched off. If up and down-link transmissions begin together then control circuitry 920 preferably selects either an up or down-link direction but not both. This may be done randomly, according to a preference for up-link or down-link transmission, according to a set of rules, or according to any other convenient criteria. For example, when a collision occurs, the 802.11 protocol will automatically establish that a collision in down-link and/or up-link transmissions has occurred with the result that the station or access point will re-transmit the information again in a later time slot.

In order to increase the isolation between the up-link and down-link transmission paths for TDD repeaters, antenna isolation features may be implemented. In general, the up-link and down-link antennas may be isolated using directionality, polarization, placement and configuration. For example, two directional antennas may be implemented in a back to back configuration to create isolation between the up-link and down-link paths. The antennas may be, for example, Yagi antenna that incorporate folded dipole elements. Alternatively, the antennas may be any directional antennas, such as an array of patches, dielectric resonators, dish, helix, taper slots, horn, and cavity or any other directional antennas that provide directional isolation form each other. The antennas may be mounted in or on a housing of the repeater using gimbal or swivel mount for example to permit easy pointing and positioning of the antennas.

Moreover, the antennas may have orthogonal polarization, such as vertical and horizontal polarization to increase isolation. Left and right circularly polarization may alternatively be used. In general, the directional antennas may be oriented such that the up-link antenna is pointed toward an access point and the down-link antenna is pointed at a device or desired coverage area that includes a device. The directionality and placement of the antennas may take into account reflective objects and other obstructions within the coverage areas.

Each feature of the antennas, cross-polarization, high gain and the reflector help increase the isolation. With Yagi antennas incorporating folded dipole elements, about 60 dB of isolation may be achieved.

FIGURE 10 depicts an implementation for a repeater within a wireless local area network (WLAN). The WLAN may implement any convenient protocol. In general, access point 1010 is coupled to a network, such as network 1000 shown. Network 1000 may be any interconnected network of computers, routers, bridges, switches and other network elements, including a local area network, a wide area network, the network of interconnected computers known as the Internet, and/or any other network. The access point may include an electrical interface, optical interface, or other interface to network 1000 for exchanging data with network 1000 pursuant to any convenient protocol including IP, HTTP, UDP, POP, SMTP and any other convenient network protocol.

Access point 1010 may also include an antenna for wireless transmissions to couple wireless stations, such as station 1050, to network 1000 through the access point. Access points are well known and may operate according to any wireless network protocol including, for example, the well known IEEE 802.11 protocol and the HIPERLAN/1 and 2 protocol.

Access point 1010 generates a signal having a coverage area 1020. When the access point is positioned in a building as shown in FIGURE 10, a repeater of the present invention may be situated in coverage area 1020 for extending coverage area 1020 into other parts of the building, such as coverage area 1040. Repeater 1030 includes two directional antennas as shown that respectively point at the access point and station 1050 in coverage area 1040. Coverage area 1040 extends network access to stations within coverage area 1040, such as station 1050. During use, station 1050 exchanges data with the network 1000 through repeater 1030 and access point 1010. The repeater receives up-link transmissions from station 1050 via a first directional antenna and re-transmits them via a second directional antenna to the access point 1010. Access point 1010 in turn forwards the data to the network 1000. In the down-link direction, access point 1010 transmits data to repeater 1030 which receives the transmission on the second antenna. The repeater in turn retransmits the data to station 1050. When both station 1050 and access point 1010 transmit simultaneously, the collision is resolved as described above.

While particular embodiments of the invention have been shown and described, it will be understood by those having ordinary skill in the art that changes may be made to those embodiments without departing from the spirit and scope of the invention. For example, while illustrative analog embodiments of the control circuitry have been described herein, it will be understood that analog to digital conversion may be performed at any point in the signal processing associated with the receive antenna input signals. Any digitized values may be processed by, for example, a microprocessor or other controller, which may generate control signals for controlling the switched directional amplifier, pre-amplifiers, switches or any other elements of a repeater system. A microprocessor, discrete logic, or other integrated circuit chips may accordingly implement the control circuitry and may provide other functionality for controlling the repeater, including functionality used to turn on or off the repeater in response to remote control signals or in response to input signal levels that fall below certain thresholds.

A microprocessor and memory may also be used to store configuration values that determine, for example, the frequency of operation of the repeater, the duty cycles associated with the up-link and down-link signaling paths, and any other variables that may be desirable to control as part of the operation of the repeater system.

It will be further understood that the power detection circuits may be implemented in a variety of forms in both analog and digital implementations. For example, one power detection circuit may be applied to receive inputs from two receive antennas rather than two separate circuits. Other similar changes may be made to the control circuitry illustrated and described herein based on well-known design choices and considerations.

Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A time division duplex repeater system, comprising:
two antennas serving first and second coverage areas, the second coverage area being an extension of the first coverage area;
a switched directional amplifier coupled between the two antennas, wherein said switched directional amplifier is controlled to only provide amplification of a signal associated with one of said first and second coverage areas at any particular point in time; and
control circuitry coupled to the switched directional amplifier and to the two antennas, the control circuitry being adapted to receive transmissions from the first and second coverage areas and apply control signals to the switched directional amplifier to control a signal path direction for said amplification by said switched directional amplifier.

2. The repeater system according to claim 1, wherein the control circuitry includes:
circuitry for determining a signal strength relationship between signals received by each of said two antennas, wherein said control circuitry selects said signal path direction as a function of said determined signal strength relationship.

3. The repeater system according to claim 2, wherein said determined signal strength relationship comprises a stronger received signal with respect to one antenna of said two antennas and a weaker received signal with respect to another one of said two antennas, and wherein said selection of said signal path direction selects a signal path direction associated with said stronger received signal.

4. The repeater system according to claim 2, wherein the circuitry for determining a signal strength relationship comprises:
at least one power detection circuit coupled to at least one of the two antennas, the at least one power detection circuit adapted to output at least one power level signal proportional to a received signal power, wherein the control circuitry determines the direction of transmission based on a lower level signal.

5. The repeater system according to claim 1, wherein the control circuitry outputs a gain control signal to the switched directional amplifier as a function of a signal received by said control circuitry from at least one of said two antennas.

6. The repeater system according to claim 1, wherein the control circuitry outputs a muting control signal as a function of analysis of a signal received by said control circuitry from at least one of said two antennas.

7. The repeater system according to claim 1, further comprising:
a first stage amplifier coupled between one antenna of the two antennas and the switched directional amplifier.

8. The repeater system according to claim 7, wherein the control circuitry comprises:
at least one first power detection circuit coupled to said first stage amplifier, the at least one first power detection circuit adapted to output at least one power level signal proportional to a first stage amplifier signal power.

9. The repeater system according to claim 8, wherein the control circuitry further comprises:
at least one second power detection circuit coupled to at least one of the two antennas, the at least one power detection circuit adapted to output at least one power level signal proportional to a received signal power.

10. The repeater system according to claim 1, further comprising:
a first stage and a second stage amplifier coupled in series between the an antenna of the two antennas and the switched directional amplifier.

11. The repeater system according to claim 10, wherein said control circuitry comprises:
a first power detection circuit coupled to an output of the first stage amplifier; and
a second power detection circuit coupled to an output of the second stage amplifier.

12. The repeater system according to claim 11, further comprising:
a switchable circuit coupled between the first and the second stage amplifiers.

13. The repeater system according to claim 12, wherein the control circuitry provide a control signal to the switchable circuit for controlling whether the input signal bypasses the second stage amplifier.

14. The repeater system according to claim 1, wherein the two antennas include at least one antenna selected from the group consisting of a Yagi, patch, dielectric resonator, dish, helix, taper slots, horn, and cavity antenna.

15. The repeater system according to claim 1, wherein the repeater is part of a wireless LAN network.

16. The repeater system according to claim 1, wherein the control circuitry comprises:
a calibration signal generation circuit; and
a gain measurement circuit adapted to measure amplification of the calibration signal when injected into the switched directional amplifier, wherein the control circuitry outputs a gain control signal to the switched directional amplifier as a function of the amplification of the calibration signal measured by the gain measurement circuit.

17. The repeater system according to claim 1, wherein the two antennas are mounted to a housing of the repeater system using adjustable mounts.

18. A system for extending a coverage area, comprising:
means for receiving a first signal associated with a first coverage area;
means for receiving a second signal associated with a second coverage area;
means for determining a direction of re-transmission based on a signal attribute associated with the first and second received signals; and
means for configuring an amplifier circuit for amplifying a selected one of the first and second received signals associated with the determined direction of re-transmission.

19. The system of claim 18, wherein said signal attribute comprises a signal level.

20. The system of claim 18, further comprising:
means for muting said amplifier circuit based on a determination that said signal attribute as associated with each of the first and second received signals meets a particular threshold.

21. The system of claim 20, wherein said threshold comprises a low signal level threshold.

22. The system of claim 18, wherein said means for configuration said amplifier circuit comprises:
a first switchable circuit coupling a first antenna with said amplifier circuit;
a second switchable circuit coupling a second antenna with said amplifier circuit, wherein said first switchable circuit is operable to couple said first antenna to an input of said amplifier circuit when said second switchable circuit is operable to couple said second antenna to an output of said amplifier circuit and said first switchable circuit is operable to couple said first antenna to said output of said amplifier circuit when said second switchable circuit is operable to couple said second antenna to said output of said amplifier circuit.

23. The system of claim 18, wherein said means for determining a direction of re-transmission comprises:
means for determining a signal level associated with said first received signal;
means for determining a signal level associated with said second received signal; and
means for comparing said first received signal level with said second received signal level.

24. A method for extending a coverage area, comprising:
determining a direction of re-transmission by a repeater system based upon a monitored signal attribute; and
configuring an amplifier circuit for amplifying a selected one of the first and second received signals associated with the determined direction of re-transmission.

25. The method of claim 24, further comprising:
receiving a first signal associated with a first coverage area; and
receiving a second signal associated with a second coverage area, wherein said monitored signal attribute is associated with at least one of said first and second received signals.

26. The method of claim 24, wherein said signal attribute comprises a signal level.

27. The method of claim 24, further comprising:
muting said amplifier circuit based on said signal attribute.

28. The method of claim 24, wherein said configuration said amplifier circuit comprises:
controlling a first switchable circuit coupling a first antenna with said amplifier circuit and a second switchable circuit coupling a second antenna with said amplifier circuit, said controlling operable to couple said first antenna to an input of said amplifier circuit and said second antenna to an output of said amplifier circuit, said controlling further operable to couple said first antenna to said output of said amplifier circuit and said second antenna to said output of said amplifier circuit.

29. The method of claim 24, wherein said determining a direction of re-transmission comprises:
determining a signal level associated with said first received signal;
determining a signal level associated with said second received signal; and
comparing said first received signal level with said second received signal level.

30. A method of extending a coverage area, comprising:
receiving first and second input signals over opposing directional antennas, the directional antennas serving respective first and second coverage areas;
determining a direction of transmission based on a signal attribute associated with the first and second received signals;
amplifying a selected one of the first and second received signals based on the determined direction of transmission, wherein the selected received signal is associated with a first opposing directional antenna of said opposing directional antennas; and
outputting the amplified received signal via a second opposing directional antenna of said opposing directional antennas.

31. The method according to claim 30, wherein said signal attribute comprises a signal power level.

32. The method according to claim 30, further comprising controlling the gain associated with said amplifying the selected one of the first and second received signals based on a power level of the received signal.

33. The method according to claim 30, further comprising selectively enabling and disabling said amplifying the selected one of the first and second received signals.

34. The method according to claim 30, further comprising pre-amplifying the received signals prior to said amplifying the selected one of the first and second received signals.

35. The method according to claim 34, wherein said determining a direct of transmission is based on a pre-amplifier output power level.

36. The method according to claim 33, wherein said pre-amplifying the received signals comprises pre-amplifying the received signals in first and second stages.

37. The method according to claim 36, wherein power levels are determined for the output of each of the stages.

38. The method according to claim 37, further comprising switching the output of the first stage to decouple the first stage from the second stage based on the determined power levels.

39. The method according to claim 30, wherein the directional antennas include at least one antenna selected from the group consisting of a Yagi, patch, dielectric resonator, dish, helix, taper slots, horn, and cavity antenna.

40. The method according to claim 30, further comprising:
adjusting an orientation of each of the opposing directional antennas to provide illumination of first and second service areas, wherein said first and second service areas are non-overlapping areas..

41. The method according to claim 30, wherein the method extends the coverage area of a wireless LAN network.

42. The method according to claim 30, further comprising:
generating a calibration signal;
measuring amplification of the calibration signal; and
adjusting said amplifying a selected one of the first and second received signals based on the measured calibration signal.

43. The method according to claim 30, further comprising:
controlling a duty cycle of said determining a direction of transmission, said amplifying a selected one of the first and second received signals, and said outputting the amplified received signal based upon a duty cycle of an underlying communication protocol.

44. The method according to claim 43, wherein said underlying communication protocol establishes a carrier detect multiple access/collision avoidance communication technique.

45. The method according to claim 44, wherein said determining a direction of transmission comprises:
utilizing alternate selection criteria when said signal attribute associated with the first and second received signals does not indicate a preference with respect to said first and second received signals.

46. The method according to claim 45, wherein said alternate selection criteria comprises randomly selecting one of said first and second received signals.

47. The method according to claim 45, wherein said alternate selection criteria comprises analyzing an attribute associated with said first and second received signals other than said signal attribute.

48. The method according to claim 47, wherein said attribute associated with said first and second received signals comprises a last to transmit node.

49. The method according to claim 47, wherein said attribute associated with said first and second received signals comprises a node priority.

50. The method according to claim 45, wherein said alternate selection criteria comprises allowing said underlying protocol to detect a transmission collision and to implement native re-transmission protocols.

51. A time division duplex repeater system, comprising:
two antennas serving first and second coverage areas respectively, the second coverage area being an extension of the first coverage area;
a switched directional amplifier having a pair of cross coupled, tri-state amplifiers coupled between the two antennas; and
control circuitry coupled to the amplifiers and to receive outputs of the antennas, the control circuitry being adapted to receive transmissions from the coverage areas and apply control signals to the amplifiers so one amplifier of the pair is active at a time to control the direction of transmission.

52. The repeater system according to claim 51, wherein the control circuitry further includes:
at least one power detection circuit coupled to the receive inputs of the antennas, the at least one power detection circuit adapted to output at least one power level signal proportional the input power received at least one of the antennas; and
wherein the control circuitry determines the direction of transmission based on the power level signal.

53. The repeater system according to claim 52, wherein the control circuitry outputs gain control signals to the amplifiers based on the at least one power level signal.

54. The repeater system according to claim 52, further comprising a first stage and a second stage amplifier coupled in series between the input of each receive antenna and the switched directional amplifier.

55. The repeater system according to claim 54, wherein a plurality of power detection circuits are implemented, ones of which being coupled the output of an amplifier stage.

56. The repeater system according to claim 55, further comprising a switchable circuit coupled between the first and the second stage amplifiers.

57. The repeater system according to claim 56, wherein the control circuitry provides a control signal to the switchable circuitry for controlling whether the input signal bypasses the second stage amplifier.

58. The repeater system according to claim 57, wherein the two antennas include at least one antenna selected from the group consisting of a Yagi, patch, dielectric resonator, dish, helix, taper slots, horn, and cavity antenna.

59. The repeater system according to claim 51, wherein the repeater is part of a wireless LAN network.
